# EUROPÄISCHE PATENTSCHRIFT

(11) **EP 2 854 246 B1**
(45) Veröffentlichungstag und Bekanntmachung des Hinweises auf die Patenterteilung: **27.04.2016**
(21) Anmeldenummer: 13186636.0
(22) Anmeldetag: 30.09.2013
(51) Int. Cl.: H02G 5/06, H01C 7/12

(54) **Herstellungsverfahren für einen Scheibenisolator zum Verschluss eines fluiddichten Gehäuses, ein mit dem Verfahren hergestellter Scheibenisolator sowie ein gasisolierter Überspannungsableiter mit einem solchen Scheibenisolator**
Method of manufacturing a disc insulator for closing a fluid-proof housing, disc insulator produced according to said method and a gas-isolated surge arrester with such an disc insulator
Procédé de fabrication d'un isolateur à disque pour la fermeture d'un boîtier étanche aux fluides, isolateur à disque fabriqué selon ce procédé et paratonnerre isolé contre les gaz doté d'un tel isolateur à disque

(43) Veröffentlichungstag der Anmeldung: 01.04.2015
(73) Patentinhaber: Siemens Aktiengesellschaft, 80333 München (DE)
(72) Erfinder: Sulitze, Markus, 14612 Falkensee (DE)

(56) Entgegenhaltungen:
- EP-A1- 1 421 661
- EP-A1- 2 178 176
- EP-A2- 1 511 146
- WO-A2-02/089258
- CN-A- 102 709 831
- DE-A1- 19 938 303
- JP-A- 2003 235 138
- JP-U- S 583 717
- US-A- 3 372 226

## Beschreibung

Herstellungsverfahren für einen Scheibenisolator zum Verschluss eines fluiddichten Gehäuses, ein mit dem Verfahren hergestellter Scheibenisolator sowie ein gasisolierter Überspannungsableiter mit einem solchen Scheibenisolator Gasisolierte Schaltanlagen sind vollständig fluiddicht gekapselte und mit einem Isolierfluid gefüllte Schaltanlagen für Hoch- und Mittelspannungen. Solche Anlagen sind meist aus einzelnen jeweils mit einem eigenen fluiddichten Gehäuse umschlossenen Aktivteilen zusammengesetzt. Solche Aktivteile sind beispielsweise Lasttrennschalter, Leistungsschalter, Erdungsschalter, Strom- und Spannungswandler oder Überspannungsableiter. Um eine Hoch- oder Mittelspannung aus dem normalerweise geerdeten Gehäuse heraus oder in dieses hinein zu führen, weisen diese Gehäuse einen Scheibenisolator auf, der das Gehäuse fluiddicht verschließt. Dieser besteht in der Regel aus einem ringförmigen Flansch, dessen Innenfläche mit einem Gießharz als Isolator gefüllt ist. In das Gießharz sind Elektroden eingefügt, die das Gießharz vollständig durchdringen. Ist ein Gehäuse mit einem solchen Scheibenisolator verschlossen, lässt sich eine elektrische Spannung über die Elektroden von außerhalb des Gehäuses ins Gehäuseinnere übertragen. Die Elektroden sind durch den Isolator gegen das Gehäuse elektrisch isoliert, so dass beim Anlegen einer Mittel-oder Hochspannung keine Gefahr eines Überschlags zwischen Elektrode und Gehäuse besteht. An der Außenseite des Scheibenisolators können weitere Komponenten der Schaltanlage angeschlossen werden. Auf der zum Gehäuseinneren weisenden Seite lassen sich die jeweiligen Aktivteile wie beispielsweise ein Überspannungsableiter anschließen. Die Aktivteile werden im Inneren des Gehäuses mit der Elektrode elektrisch verbunden.

Solche Scheibenisolatoren sind beispielsweise aus der DE 10 2006 040 038 A1 und der EP 2 210 323 A1 bekannt. Ein Scheibenisolator nach dem Oberbegriff des Anspruchs 2 ist aus der EP 1 511 146 A2 bekannt.

Bekannt ist auch, das Aktivteil mittels Kabeln, die mit der Elektrode und dem Aktivteil verschraubt werden, mit der Elektrode zu verbinden. Bekannt ist ebenfalls, an der Elektrode ein Verbindungselement mittels Schrauben zu befestigen, mit dem das Aktivteil elektrisch verbunden werden kann.

Aufgabe der Erfindung ist es, einen einfacher herzustellenden Scheibenisolator, ein Herstellungsverfahren für diesen sowie einen Überspannungsableiter mit einem solchen anzugeben.

Erfindungsgemäß wird die Aufgabe bezüglich des Herstellungsverfahrens mit den Merkmalen des Anspruchs 1 gelöst.

Der erfindungsgemäße Scheibenisolator dient zum Verschluss eines fluiddichten Gehäuses. Der Scheibenisolator weist einen scheibenförmigen Isolator aus Gießharz, einen den Isolator einfassenden Flansch zum Anflanschen an das Gehäuse, eine in den Isolator eingegossene und diesen durchsetzende Elektrode und ein mit der Elektrode verbundenes Kontaktstück zur elektrischen Verbindung mit einem in dem Gehäuse angeordneten Aktivteil auf. Zur Herstellung des Scheibenisolators werden eine oder mehrere Elektroden sowie gegebenenfalls der Flansch in eine Gießform eingelegt und die Gießform geschlossen. Die Gießform wird dann mit einem Gießharz gefüllt und das Gießharz unter Wärmeeinwirkung ausgehärtet. Dabei wird die Gießform mit eingelegten Elektroden sowie gegebenenfalls dem Flansch erwärmt, beispielsweise in einem Ofen. Ist das Gießharz ausgehärtet bildet es einen Isolator mit eingegossenen Elektroden und einem Flansch. Die Form wird geöffnet und der Isolator entnommen. Bevor dieser abkühlt, wird das Kontaktstück in eine Ausnehmung der Elektrode eingesteckt. Der Isolator mit den Elektroden und dem Flansch kühlt nun ab. Dabei schrumpft die Elektrode auf das Kontaktstück auf, bis eine Pressverbindung zwischen Elektrode und Kontaktstück hergestellt ist. Das Kontaktstück ist nun fest mit der Elektrode verbunden. Ein solches Herstellungsverfahren ist besonders effizient. Es kann zum Einen auf Gewinde am Kontaktstück und der Elektrode verzichtet werden, zum Anderen entfallen aufwändigere Montageschritte zum Anbringen des Kontaktstückes an der Elektrode durch Schrauben oder Ähnliches.

Die Aufgabe bezüglich des Scheibenisolators wird mit den Mitteln der Erfindung gemäß Anspruch 2 gelöst.

Dabei weist ein Scheibenisolator zum Verschluss eines fluiddichten Gehäuses einen scheibenförmigen Isolator aus Gießharz, einen den Isolator einfassenden Flansch zum Anflanschen an das Gehäuse, eine in den Isolator eingegossene und diesen durchsetzende Elektrode und ein mit der Elektrode verbundenes Kontaktstück zur elektrischen Verbindung mit einem in dem Gehäuse angeordneten Aktivteil auf. Erfindungsgemäß ist das Kontaktstück in eine Ausnehmung der Elektrode eingesteckt und mit der Elektrode durch eine Pressverbindung verbunden. Ein solcher Scheibenisolator ist aus den oben erwähnten Gründen besonders einfach herstellbar.

In einer vorteilhaften Ausgestaltung der Erfindung weist das Kontaktstück einen Schaft und einen pilzförmigen Schirm auf, wobei der Schaft in die Ausnehmung der Elektrode eingesteckt ist. Der Schirm dient einerseits als Anschlag und schirmt gleichzeitig eventuell vorhandene Gießharzspitzen am Übergang von Isolator zur Elektrode ab und vermindert so die Gefahr von Teilentladungen.

Besonders vorteilhaft weist der Schirm dazu einen größeren Durchmesser als die Elektrode auf. Dadurch wird besonders effektiv die Gefahr von Teilentladungen verhindert.

In einer weiteren vorteilhaften Ausgestaltung der Erfindung weist das Kontaktstück eine Ausnehmung zum Einstecken eines mit dem Aktivteil verbundenen Steckkontaktes auf. Dadurch lässt sich bei der späteren Montage des Gehäuses und des Aktivteils das Aktivteil besonders einfach an die Elektrode anschließen.

Die Aufgabe bezüglich des Überspannungsableiters wird mit den Mitteln der Erfindung gemäß Anspruch 6 gelöst.

Dabei weist ein gasisolierter Überspannungsableiter ein in einem fluiddichten Gehäuse angeordnetes Ableitelement als Aktivteil auf. Das Gehäuse ist mit einem oben beschriebenen Scheibenisolator fluiddicht verschlossen. Ein solcher Überspannungsableiter ist besonders einfach zu montieren. Insbesondere, wenn das Kontaktstück eine Ausnehmung zum Einstecken eines Steckkontaktes und das Ableitelement einen entsprechenden Steckkontakt aufweisen, kann der Scheibenisolator einfach als Deckel auf ein Gehäuse mit einem darin angeordneten Ableitelement aufgesetzt werden. Die Verbindung zwischen Ableitelement und Elektrode wird dabei automatisch hergestellt, sofern der Steckkontakt des Ableitelements entsprechend auf die Ausnehmung des Kontaktstücks ausgerichtet ist.

Im Folgenden wird die Erfindung anhand der Zeichnungen näher erläutert. Dabei zeigen:
- Figur 1: einen Scheibenisolator von der Außenseite,
- Figur 2: einen Scheibenisolator von der Innenseite,
- Figur 3: eine Schnittdarstellung eines Scheibenisolators.

Einander entsprechende Teile sind in allen Figuren mit den gleichen Bezugszeichen versehen.

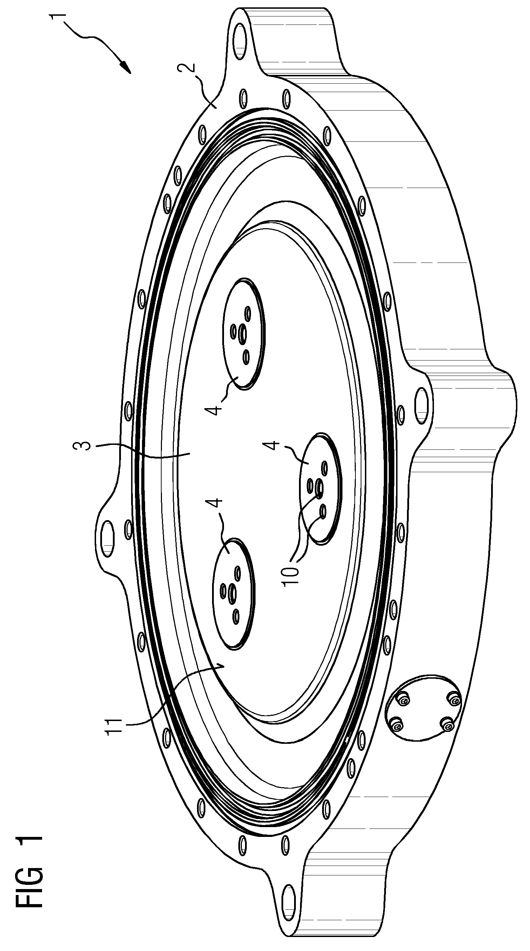

Die Figur 1 zeigt einen Scheibenisolator 1 von der Außenseite 11, also der Seite, die außen liegt, wenn der Scheibenisolator 1 an einem Gehäuse angebracht ist. Ein ringförmiger Flansch 2 dient zum Anflanschen an einen Gehäuseflansch eines nicht dargestellten Gehäuses. Zwischen dem Flansch 2 und dem Gehäuseflansch sind Dichtungen zum Abdichten des Gehäuses angeordnet. Der Flansch 2 fasst einen scheibenartigen Isolator 3 aus Gießharz ein. Häufig ist der Flansch 2 aus Metall, wie hier dargestellt. Es ist aber auch möglich den Flansch 2 ebenso wie den Isolator 3 aus Gießharz herzustellen. In diesem Fall können Flansch und Isolator in einem Gussvorgang oder aber auch in getrennten Gussvorgängen hergestellt werden.

In den Isolator 3 sind drei Elektroden 4 eingegossen. Andere Ausführungen können eine, zwei oder auch mehr Elektroden 4 aufweisen. Die Elektroden 4 sind weitgehend zylindrisch und durchsetzen den Isolator 3 derart, dass die Deckflächen der Elektroden 4 die Oberfläche des Isolators 3 auf der Innenseite 12 und der Außenseite 11 durchstoßen. Die Deckflächen der Elektroden 4 können bündig mit der Oberfläche des Isolators 3 abschließen, oder aber leicht daraus hervorstehen. Die Elektroden 4 weisen auf ihrer äußeren Deckfläche Bohrungen 10, gegebenenfalls mit Gewinde, auf, über die weitere Anlagenteile angeschlossen werden können. Die Ansicht von der Außenseite 11 eines erfindungsgemäßen Scheibenisolators 1 unterscheidet sich zunächst nicht von der eines bekannten Scheibenisolators.

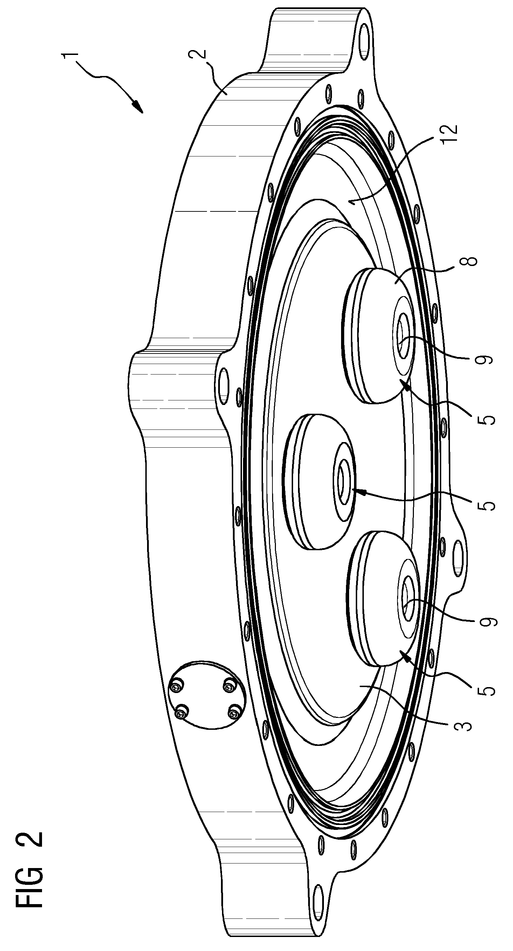

Die Figur 2 zeigt einen erfindungsgemäßen Scheibenisolator 1 von der Innenseite 12, also der Seite, die im Gehäuseinneren liegt, wenn der Scheibenisolator 1 an einem Gehäuse angebracht ist. Dort sind an der Deckfläche der Elektroden 4 Kontaktstücke 5 mit einem Schirm 8 und einem hier nicht sichtbaren Schaft 7 angeordnet. Die Kontaktstücke 5 weisen jeweils eine Ausnehmung 9 auf, in die zum Anschluss eines in dem Gehäuse angeordneten Aktivteils ein Steckkontakt eingesteckt werden kann. Solche Steckkontakte kommen beispielsweise bei Überspannungsableitern mit Trennvorrichtungen vor. Dort kann der Steckkontakt mittels der Trennvorrichtung in eine solche Ausnehmung 9 eingeführt oder aus ihr heraus geführt werden, um eine elektrische Verbindung herzustellen oder zu trennen.

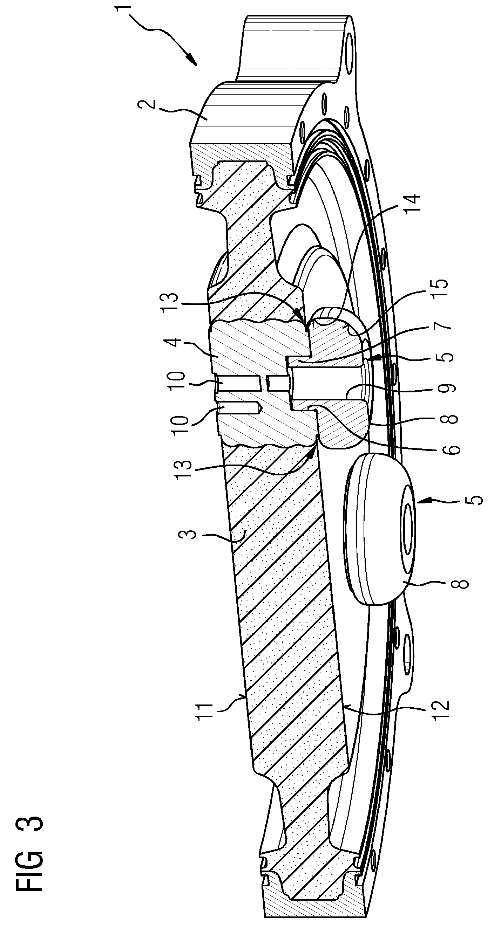

Die Figur 3 zeigt einen Teilschnitt durch einen Scheibenisolator 1. Das Kontaktstück 5 ist pilzförmig mit einem Schaft 7 und einem Schirm 8. Der Schirm 8 weist einen größeren Durchmesser als der Schaft 7 auf. Das Kontaktstück 5 ist mit seinem Schaft 7 in eine Ausnehmung 6 der Elektrode 4 auf der Innenseite 12 eingesteckt und mittels einer Pressverbindung mit dieser verbunden. Der Schirm 8 liegt mit einer Unterseite an der Elektrode 4 an und weist einen etwas größeren Durchmesser als die Elektrode 4 auf. Dadurch werden etwa vorhandene Gießharzspitzen 13 am Übergang vom Isolator 3 zur Elektrode 4 vor elektrischen Feldern abgeschirmt und so Teilentladungen verhindert. Der Schirm weist auf seiner der Elektrode 4 zugewandten Seite eine Abrundung 14 und auf seiner von der Elektrode 4 abgewandten Seite eine Abrundung 15 auf. Durch die Abrundungen 14, 15 werden Feldspitzen vermieden. Eine Ausnehmung 9 ist als durchgängige Bohrung durch Schirm 8 und Schaft 7 geführt. In diese Ausnehmung 9 ist ein mit einem in dem Gehäuse angeordneten Aktivteil verbundener Steckkontakt einsteckbar.

Zur Herstellung eines solchen Scheibenisolators 1 wird zunächst der oder die Elektroden 4 in eine Gießform eingelegt. Falls ein Flansch 2 aus Metall oder ein vorgefertigter Flansch 2 aus Gießharz oder einem anderen Material verwendet werden soll, wird auch dieser in die Form eingelegt. Die Form weist dazu Aufnahmen für die Elektroden 4 und gegebenenfalls für den Flansch auf. Als Form wird meist eine zweiteilige Gießform verwendet. Die Form dann geschlossen und ein Gießharz wird in die Form eingefüllt. Je nach Viskosität des verwendeten Gießharzes geschieht dies gegebenenfalls unter Druck. Die geschlossene Form wird nun einer Wärmebehandlung beispielsweise in einem Ofen unterzogen, wobei die Form mit der Elektrode 4, gegebenenfalls dem Flansch 2 und dem eingefüllten Gießharz erwärmt wird. Die Temperatur hängt dabei von dem verwendeten Gießharz ab, beträgt aber meist über 100 °C. Durch die Wärmeeinwirkung beginnt das Gießharz zu vernetzen, härtet aus und bildet so den Isolator 3. Während der Wärmebehandlung dehnen sich außerdem alle in der Form enthaltenen Teile aus. Insbesondere weitet sich die Ausnehmung 6 der Elektrode. Ist der Aushärtevorgang abgeschlossen, wird die Form aus dem Ofen entnommen, geöffnet und der ausgehärtete Isolator 3 mit den darin eingegossenen Elektroden 4 und dem Flansch 2 entnommen. Ein bereitgehaltenes Kontaktstück 5, das nicht der Wärmebehandlung unterzogen wurde, wird nun mit seinem Schaft 7 in diese Ausnehmung 6 eingesteckt. Der Schaft 7 hat in seinem Durchmesser ein Übermaß gegenüber dem Innendurchmesser der Ausnehmung 6. Durch die Weitung der Ausnehmung 6 infolge der Wärmeeinwirkung lässt sich der Schaft 7 dennoch darin einstecken. Der Scheibenisolator 1 ist nun fertig montiert und muss nur noch abkühlen. Dies kann passiv geschehen, oder durch eine aktive Kühlung beispielsweise mit einem Gebläse. Beim Abkühlen schrumpft nun der Innendurchmesser der Ausnehmung 6 der Elektrode 4 auf den Schaft 7 des Kontaktstückes 5 auf, bis eine Presseverbindung zwischen Elektrode und Kontaktstück hergestellt ist.

## Patentansprüche

1. Verfahren zur Herstellung eines Scheibenisolators (1) zum Verschluss eines fluiddichten Gehäuses, der
- einen scheibenförmigen Isolator (3) aus Gießharz,
- einen den Isolator (3) einfassenden Flansch (2) zum Anflanschen an das Gehäuse,
- eine in den Isolator (3) eingegossene und diesen durchsetzende Elektrode (4) und
- ein mit der Elektrode (4) verbundenes Kontaktstück (5) zur elektrischen Verbindung mit einem in dem Gehäuse angeordneten Aktivteil
aufweist,
umfassend die Schritte
- Einlegen der Elektrode (4) in eine Gießform,
- Füllen der Gießform mit Gießharz,
- Aushärten des Gießharzes durch Wärmeeinwirkung und
- Öffnen der Gießform,
**gekennzeichnet durch** die Schritte,
- Einstecken des Kontaktstücks (5) in eine Ausnehmung (6) der Elektrode (4) und
- Aufschrumpfen der Elektrode (4) auf das Kontaktstück (5) durch Abkühlen, bis eine Presseverbindung zwischen Elektrode (4) und Kontaktstück (5) hergestellt ist.

2. Scheibenisolator (1) zum Verschluss eines fluiddichten Gehäuses, aufweisend
- einen scheibenförmigen Isolator (3) aus Gießharz,
- einen den Isolator (3) einfassenden Flansch (2) zum Anflanschen an das Gehäuse,
- eine in den Isolator (3) eingegossene und diesen durchsetzende Elektrode (4) und
- ein mit der Elektrode (4) verbundenes Kontaktstück (5) zur elektrischen Verbindung mit einem in dem Gehäuse angeordneten Aktivteil,
**dadurch gekennzeichnet, dass**
das Kontaktstück (5) in eine Ausnehmung (6) der Elektrode (4) eingesteckt und mit der Elektrode (4) durch eine Pressverbindung verbunden ist.

3. Scheibenisolator (1) nach Anspruch 2,
**dadurch gekennzeichnet, dass**
das Kontaktstück (5) einen Schaft (7) und einen pilzförmigen Schirm (8) aufweist, der Schaft (7) in die Ausnehmung (6) der Elektrode (4) eingesteckt ist.

4. Scheibenisolator (1) nach einem der Ansprüche 2 oder 3,
**dadurch gekennzeichnet, dass**
der Schirm (8) einen größeren Durchmesser aufweist als die Elektrode (4).

5. Scheibenisolator (1) nach einem der Ansprüche 2 bis 3,
**dadurch gekennzeichnet, dass**
das Kontaktstück (5) eine Ausnehmung (9) zum Einstecken eines mit dem Aktivteil verbundenen Steckkontaktes aufweist.

6. Gasisolierter Überspannungsableiter mit einem in einem fluiddichten Gehäuse angeordneten Ableitelement,
**dadurch gekennzeichnet, dass**
ein Scheibenisolator (1) nach einem der Ansprüche 2 bis 5 das Gehäuse fluiddicht verschließt.

## Claims

1. Method for manufacturing a disc insulator (1) for closing a fluid-tight housing, which has
- a disc-shaped insulator (3) made of cast resin,
- a flange (2) enclosing the insulator (3) for flanging the latter onto the housing,
- an electrode (4) cast into the insulator (3) and passing through the latter, and
- a contact piece (5) connected to the electrode (4) for electrical connection to an active part arranged in the housing,
comprising the steps of
- placing the electrode (4) into a casting mould,
- filling the casting mould with casting resin,
- curing the casting resin by the effect of heat and
- opening the casting mould,
**characterized by** the steps of
- inserting the contact piece (5) into a recess (6) of the electrode (4) and
- shrink-fitting the electrode (4) onto the contact piece (5) by cooling until a press-fit connection between the electrode (4) and the contact piece (5) is established.

2. Disc insulator (1) for closing a fluid-tight housing, having
- a disc-shaped insulator (3) made of cast resin,
- a flange (2) enclosing the insulator (3) for flanging the latter onto the housing,
- an electrode (4) cast into the insulator (3) and passing through the latter, and
- a contact piece (5) connected to the electrode (4) for electrical connection to an active part arranged in the housing,
**characterized in that**
the contact piece (5) is inserted into the recess (6) of the electrode (4) and is connected to the electrode (4) by a press-fit connection.

3. Disc insulator (1) according to Claim 2,
**characterized in that**
the contact piece (5) has a shank (7) and a mushroom-shaped shed (8), the shank (7) being inserted in the recess (6) of the electrode (4).

4. Disc insulator (1) according to either of Claims 2 and 3,
**characterized in that**
the shed (8) has a greater diameter than the electrode (4).

5. Disc insulator (1) according to either of Claims 2 and 3, **characterized in that** the contact piece (5) has a recess (9) for inserting a plug-in contact connected to the active part.

6. Gas-insulated surge arrester with an arresting element arranged in a fluid-tight housing,
**characterized in that**
a disc insulator (1) according to one of Claims 2 to 5 closes the housing in a fluid-tight manner.

## Revendications

1. Procédé de fabrication d'un isolateur (1) à disque pour la fermeture d'une enveloppe étanche aux fluides, qui a
- un isolateur (3) en forme de disque en résine de coulée,
- une bride (2) enchâssant l'isolateur (3) pour le bridage sur l'enveloppe,
- une électrode (4) coulée dans l'isolateur (3) et le traversant et
- une pièce (5) de contact, qui est reliée à l'électrode (4) pour la liaison électrique avec une partie active disposée dans l'enveloppe
comprenant les stades :
- on met l'électrode (4) dans un moule de coulée,
- on remplit le moule de coulée de résine de coulée,
- on durcit la résine de coulée par action de la chaleur et
- on ouvre le moule de coulée,
**caractérisé par** les stades,
- on enfiche la pièce (5) de contact dans un évidement (6) de l'électrode (4) et
- on rétreint l'électrode (4) sur la pièce (5) de contact par refroidissement jusqu'à ce qu'une liaison serrée entre l'électrode (4) et la pièce (5) de contact soit obtenue.

2. Isolateur (1) à disque pour la fermeture d'une enveloppe étanche aux fluides comprenant
- un isolateur (3) en forme de disque en résine de coulée,
- une bride (2) enchâssant l'isolateur (3) pour le bridage sur l'enveloppe,
- une électrode (4) coulée dans l'isolateur (3) et le traversant et
- une pièce (5) de contact, qui est reliée à l'électrode (4) pour la liaison électrique avec une partie active disposée dans l'enveloppe,
**caractérisé en ce que**
- la pièce (5) de contact est enfichée dans un évidement (6) de l'électrode (4) et est reliée à l'électrode (4) par une liaison serrée.

3. Isolateur (1) à disque suivant la revendication 2, **caractérisé en ce que**
la pièce (5) de contact a un fût (7) et un blindage (8) en forme de champignon, le fût (7) étant enfiché dans l'évidement (6) de l'électrode (4).

4. Isolateur (1) à disque suivant l'une des revendications 2 ou 3,
**caractérisé en ce que**
le blindage (8) a un diamètre plus grand que celui de l'électrode (4).

5. Isolateur (1) à disque suivant l'une des revendications 2 à 3,
**caractérisé en ce que** la pièce (5) de contact a un évidement (9) d'enfichage d'un contact à enficher relié à la partie active.

6. Paratonnerre isolé vis-à-vis d'un gaz, ayant un élément de dérivation disposé dans une enveloppe étanche aux fluides, **caractérisé en ce qu'**un isolateur (1) à disque suivant l'une des revendications 2 à 5 ferme l'enveloppe d'une manière étanche aux fluides.
